Europäisches Patentamt

European Patent Office

Office européen des brevets

(19)

(11) Publication number: **0 453 947 A2**

# EUROPEAN PATENT APPLICATION

(21) Application number: 91106166.1

(22) Date of filing: 17.04.91

(51) Int. Cl.⁵: **C04B 28/18**, //(C04B14/04, 14:10,14:26,20:00,22:00,22:06, 24:12)

(30) Priority: **18.04.90 IT 2006890**

(43) Date of publication of application:
**30.10.91 Bulletin 91/44**

(84) Designated Contracting States:
**AT BE DE DK ES FR GB GR LU NL SE**

(71) Applicant: **CONTENTO TRADE S.A.S. di CIOFFI ILARIA**
**14, Via Santa Barbara**
**I-33020 Rigolato frazione Valpicetto, Udine(IT)**

(72) Inventor: **Contento, Maria Pia**
**506, Viale Venezia**
**I-33100 Udine(IT)**
Inventor: **Cioffi, Flavio**
**506, Viale Venezia**
**I-33100 Udine(IT)**

(74) Representative: **Weinhold, Peter, Dr. et al**
**Patentanwälte Dipl.-Ing. G. Dannenberg Dr.**
**P. Weinhold Dr. D. Gudel Dipl.-Ing. S.**
**Schubert Dr. P. Barz Siegfriedstrasse 8**
**W-8000 München 40(DE)**

(54) **Mix for civil and road building and process for the preparation thereof.**

(57) Described is a mix for civil and road building, obtainable by a mild thermal treatment of a mixture comprising:
(a) at least one modified silicate containing alumina and calcium;
(b) water containing sulphate ions;
(c) a crystallization orientator;
(d) optionally, a basicity regulator;
(e) optionally, an inorganic correcting material for maintaining the content of alumina and calcium in the mixture in considerable excess with respect to the sulphate ions.

The present invention relates to a mix for civil and road building and to a process for preparing the same.

More particularly the present invention relates to an essentially inorganic or mineral mix for civil and road building, based on a mixture of inert and incoherent materials stiffened by a binder comprising an interlacement of acicular crystals of ettringite produced "in situ" in said mix.

The chemical composition of ettringite or calcium trisulfoaluminate may be represented by the formula:

$$3CaSO_4xAl_2O_3x3CaOx3OH_2O \quad (1)$$

It may be obtained by reacting, in a basic medium, a sulphate with excess alumina and lime in the presence of water.

It has now been found that by effecting the formation of ettringite crystals in suitable mixtures of inert, incoherent materials which can be found easily in nature, mixes may be obtained which are characterized by excellent mechanical properties and which, therefore, can be used in the field of civil and road building.

Accordingly the present invention provides a mix for civil and road building which is obtainable by a (mild) thermal treatment of a mixture comprising

(a) at least one modified (altered) silicate containing alumina and calcium;

(b) water containing sulphate ions;

(c) a crystallization orientator;

(d) optionally, a basicity regulator; and

(e) optionally, an inorganic correcting material for maintaining the content of alumina and calcium in the mixture in (considerable) excess with respect to the sulphate ions.

Examples of suitable modified silicates, i.e., silicates in which the hydrolysis by atmospheric agents has just started, are tectosilicates, phyllosilicates, inosilicates, neosilicates, sorosilicates, clays (illite) and granite.

One type of water containing sulphate ions, which is particularly suitable for use in the preparation of the mix of the present invention is sea water. Alternative water types are sebca water, brackish well waters and the like.

Any substance capable of orienting (initiating) the salt crystallization can be used for the mix of the present invention, although urea is preferred, said urea being generally used in amounts of from 0.1 to 15% by weight, based on the total mixture.

When the modified silicate is particularly rich in silica it can be replaced, partly or even completely, by other inorganic materials containing alumina and calcium. These correcting materials serve to maintain the $Al_2O_3$ and calcium content in considerable excess over the sulphate ions which excess is necessary for producing ettringite of the above formula (1).

Examples of such correctors are carbonatic or lateritic clays, loam rocks, carbonatic rocks (such as dolomite and limestone), ground waste coming from the demolition of buildings built with concretes and tiles and the like.

As the ettringite formation is effected in a basic medium, it is preferred that the mixture, before the thermal treatment, has a pH of at least 7, preferably of from 9 to 12.

If use is made of a basicity regulator, this regulator can be selected, e.g., from those of natural origin (such as basic metamorphic rocks), those of artificial origin (such as lime), and from those coming from a chemical synthesis (such as soda, ammonia and the like). Said regulator is generally used in amounts which allow to obtain the above pH values.

The constituent materials of the mix of the present invention are preferably used in ratios such that they result in the following concentrations:

0.01 to 5, preferably 0.1 to 1% by weight of sulphate ions, based on the total composition;

0.1 to 30, preferably 1 to 15% by weight of calcium, based on the total composition;

0.1 to 60, preferably 5 to 30% by weight of alumina, based on the total composition;

the optionally present inert materials (such as silica) adding up to 100%.

The components of the mix of the present invention are mixed to give rise to a plastic and moldable mixture.

The water necessary to obtain said mixture preferably is the water containing the sulphate ions. Said water is used in amounts which depend on the kind of the other materials employed and on the granulometric distribution of the latter. Generally, however, said amount ranges from 5 to 70% by weight, based on the total composition.

The thus obtained mixture is treated thermally at not too high a temperature for times sufficient for removing the excess water and for increasing the initial rate of ettringite crystallization. The most suitable temperatures are above 30°C and preferably range from about 35 to about 50°C.

Since the ettringite crystallization can also take place (although slowly) at temperatures below 30°C, mixes according to the present invention can also be obtained by removing the excess water from the mixture by natural evaporation at room temperature, generally ranging from 5 to 25°C.

The mix of the present invention generally shows an ultimate tensile compression stress at 180 days (measured according to UNI 6132) of 5 to 20 MPa, an ultimate tensile bending stress at 180 days (according to UNI 6133) of from 1 to 4 MPa and a water absorption by dipping (7 days) of less than 50% by weight, most frequently of from 10 to 25% by weight.

The mix of the invention tends to develop considerable mechanical resistance over time and therefore it can be used for preparing bricks, building blocks, floorings, roadbeds and the like, as well as for the strengthening of foundations.

A preferred process for preparing the mix of the present invention comprises the steps of

(i) dry mixing of the solid components;

(ii) kneading said solid components with water containing the sulphate ions;

(iii) shaping the mixture into the desired article; and

(iv) drying the shaped article at a temperature of at least 30°C.

Since it is very favourable to mix the above solid components in granular form with a granulometric distribution which serves to reduce the empty space inside the mix to a minimum and which allows to obtain a high degree of compaction, it is preferred to use materials in the form of granules having a diameter below 25 mm, up to 80% by weight of said materials having a granulometry below 0.2 mm.

The following examples are to further illustrate the present invention without limiting the scope thereof.

EXAMPLE 1

600 g of dry powder of clay (illite), 300 g of powder of ground granite, 80 g of limestone, 10 g of nitrogen-containing fertilizer containing 40% of urea and 10 g of 18% aqueous ammonia were mixed with 500 ml of thrice concentrated sea water.

The solid components of the mixture showed a granulometric distribution below 2 mm and, more particularly, 66% by weight of said components had a granulometry below 0.2 mm.

The mixture was then tamped into a cylindrical die having a diameter of 100 mm and a height of 100 mm, whereafter it was treated for 4 hours at 35°C in a dry environment and for 4 hours at 35°C in an environment having a relative humidity above 60%.

Then the die was opened and the material was kept for 4 hours at 20°C in an environment having a relative humidity above 60%.

In a compression test the thus prepared sample showed a resistance to compression of 2 MPa.

EXAMPLE 2

Example 1 was repeated, except by using 300 g of dry powder of clay (illite) and 600 g of powder of ground granite. The obtained sample showed a resistance to compression of 2.3 MPa.

EXAMPLE 3

Example 1 was repeated, except by using 250 g of dry powder of clay (illite), 430 g of granite powder and 300 g of ground limestone.

The obtained sample showed a resistance to compression of 2 MPa.

EXAMPLE 4

Example 1 was repeated, except by using 280 g of dry powder of clay (illite) and 600 g of powder of ground granite. The obtained sample showed a resistance to compression of 2.5 MPa.

**Claims**

1. Mix for civil and road building, obtainable by thermally treating a mixture comprising

    (a) at least one modified silicate containing alumina and calcium;

    (b) water containing sulphate ions;

    (c) a crystallization orientator;

    (d) optionally, a basicity regulator; and

    (e) optionally, an inorganic correcting material for maintaining the content of alumina and calcium in the mixture in excess over the sulphate ions.

2. Mix according to claim 1, wherein the modified silicate is selected from tectosilicates, phyllosilicates, inosilicates, neosilicates, sorosilicates, clays (illite) and granite and/or wherein the water containing sulphate ions is selected from sea water, sebca water and brackish well waters and/or wherein the crystallization orientator comprises urea.

3. Mix according to any one of the preceding claims, wherein the basicity regulator is of natural and/or artificial origin and/or comes from a chemical synthesis process.

4. Mix according to any one of the preceding claims, wherein the correcting inorganic material replaces the modified silicate partly or completely.

5. Mix according to any one of the preceding claims, wherein the mixture has a pH of at least 7, particularly of from 9 to 12.

6. Mix according to any one of the preceding claims, wherein the constituent materials are used in amounts such that they result, with respect to the total composition, in the following concentrations:
0.01 to 5% by weight of sulphate ions;
0.1 to 30% by weight of calcium;
0.1 to 60% by weight of alumina.

7.  Mix according to any one of the preceding claims, wherein the kneading water comporises the water containing the sulphate ions.

8.  Mix according to any one of the preceding claims, wherein the thermal treatment of the mixture is carried out at a temperature of at least 30°C.

9.  Process for preparing a shaped article, comprising the steps of
    (i) dry mixing of the solid components specified in claim 1;
    (ii) kneading said solid components with water containing sulphate ions to form a mixture;
    (iii) shaping the mixture into the desired article; and
    (iv) drying the shaped article at a temperature of at least 30°C, particularly of from 35 to 50°C.

10. Process according to claim 9, wherein the solid components are employed in granular form with a granulometric distribution below 25 mm, up to 80% by weight of said components having a granulometry of below 0.2 mm.

11. Shaped article for civil and road building, obtainable by (i) mixing components (a) to (c) and, optionally, (d) and/or (e) as specified in claim 1; (ii) kneading the resulting mixture; (iii) shaping the kneaded mixture into the desired article; and (iv) drying said shaped article at a temperature of at least 30°C, particularly of from 35 to 50°C.

12. Use of the mix according to any one of claims 1 to 8 for the manufacture of bricks, building blocks, floorings and road beds or for the strengthening of foundations.